# EUROPEAN PATENT SPECIFICATION

(11) **EP 3 211 476 B1**
(45) Date of publication and mention of the grant of the patent: **29.01.2020**
(21) Application number: 15763807.3
(22) Date of filing: 16.03.2015
(51) Int. Cl.: G02F 1/13357, F21V 29/00, G02F 1/1335

(54) **BACKLIGHT MODULE AND DISPLAY DEVICE**
RÜCKLICHTMODUL UND ANZEIGEVORRICHTUNG
MODULE DE RÉTROÉCLAIRAGE ET DISPOSITIF D'AFFICHAGE

(30) Priority: 22.10.2014 CN 201410568932
(43) Date of publication of application: 30.08.2017
(73) Proprietor: BOE Technology Group Co., Ltd., Beijing 100015 (CN)
(72) Inventor: ZHU, Lin, Beijing 100176 (CN); WU, Yanbing, Beijing 100176 (CN)
(74) Representative: Lavoix
(86) International application number: PCT/CN2015/074267
(87) International publication number: WO 2016/061983

(56) References cited:
- CN-A- 102 374 509
- CN-A- 102 799 023
- CN-A- 103 176 303
- CN-A- 103 322 457
- CN-A- 103 487 987
- CN-A- 104 317 088
- US-A1- 2006 256 254
- US-A1- 2008 106 911
- US-A1- 2013 083 513
- US-A1- 2014 071 374

## Description

### TECHNICAL FIELD

The present disclosure relates to the field of display technology, in particular to a backlight module and a display device.

### BACKGROUND

During the manufacture of a liquid crystal display device, usually an aluminum substrate is used to dissipate heat generated by a light source in a body of the liquid crystal display device. To be specific, the aluminum substrate is fixed to the body through a screw, so as to dissipate the heat from the light source.

However, it is found that the heat will be dissipated through the aluminum substrate in a less effective manner during the long-term use of the body, and the heat from the light source will not be dissipated in time. At this time, the light source will be always at a high temperature and serious light attenuation will occur. As a result, the brightness and a service life of the light source, and thereby the quality of the final product, will be adversely affected.

US 2014/071374 A1 discusses a liquid crystal display device, which includes a backlight module, a mold frame mounted on the backlight module, a liquid crystal display panel mounted on the mold frame, and a bezel mounted on the liquid crystal display panel; US 2013/083513 A1 discusses a light source unit which switches one or more of light source groups (P, Q, R), each comprising one or more of light sources, ON and OFF for each light source group or each light source; US 2006/256254 A1 discusses an LCD which includes an LCD panel, a light guiding plate disposed at a rear of the LCD panel and having a light incident surface on which a curved surface pattern is formed, and a point light source facing the light incident surface and disposed closer to the LCD panel than to a center of thickness of the light incident surface; US 2008/106911 A1 discusses a backlight assembly which includes a light source unit including a printed circuit board ("PCB") and a plurality of light emitting diodes ("LEDs") mounted on a side of the PCB, a receiving member including a base plate and a plurality of walls that extend from the base plate at an angle and receive the light source unit, and a plurality of through holes or uneven patterns formed in a region of the receiving member where at least the light source unit is disposed.

### SUMMARY

An object of the present disclosure is to provide a backlight module and a display device, so as to prevent the occurrence of serious light attenuation for a light source due to a non-ideal heat-dissipation effect caused when an aluminum substrate is used to dissipate heat from the light source, thereby to prolong a service life of the light source.

In one aspect, the present disclosure provides in one embodiment a backlight module, including a substrate, a plurality of light sources arranged at one side of the substrate, and a graphite thermal conduction layer arranged at the other side of the substrate, and a black plate of a body, wherein wherein the backlight module is characterized in that the substrate (1) is arranged at each of two side portions of the back plate, via-holes (4) are provided at two side portions at a bottom of the back plate, and the via-hole is formed obliquely.

Alternatively, the substrate is a printed circuit board made of aluminum.

Alternatively, the graphite thermal conduction layer is coated onto the substrate.

Alternatively, the light source is a light-emitting diode (LED) lamp.

Alternatively, the graphite thermal conduction layer is of a sheet-like shape, and the sheet-like graphite thermal conduction layer is adhered onto the substrate.

In another aspect, the present disclosure provides in one embodiment a display device including the above-mentioned backlight module.

Alternatively, the display device further includes an upper substrate and a lower substrate arranged opposite to each other to form a cell. An upper polarizer is arranged at an upper surface of the upper substrate, a color filter layer is arranged at a lower surface of the upper substrate, a wire-grid polarizer and an array layer are arranged at an inner surface of the lower substrate, an alignment layer is arranged at an inner surface of each of the upper and lower substrates, a liquid crystal layer is arranged between the upper substrate and the lower substrate and sealed with a sealant at its periphery, nano-particles are arranged at an outer surface of the lower substrate, and a reflector is arranged on the surface where the nano-particles are arranged.

According to the backlight module and the display device in the embodiments of the present disclosure, the heat generated in the body is dissipated through the graphite thermal conduction layer. Depending on the characteristics of graphite itself, the graphite thermal conduction layer has thermal conductivity up to 1000 w/mk in a horizontal direction. The graphite thermal conduction layer may be arranged, and used to dissipate the heat, in a direction identical to a hot gas flow direction. As a result, it is able to improve the heat dissipation efficiency maximally, thereby to prevent the occurrence of light attenuation and prolong a service life of the light source.

### BRIEF DESCRIPTION OF THE DRAWINGS

Fig.1 is a schematic view showing a backlight module according to one embodiment of the present disclosure;
Fig.2 is a top view of via-holes in the backlight module according to one embodiment of the present disclosure; and
Fig.3 is a side view of the via-holes in the backlight module according to one embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure.

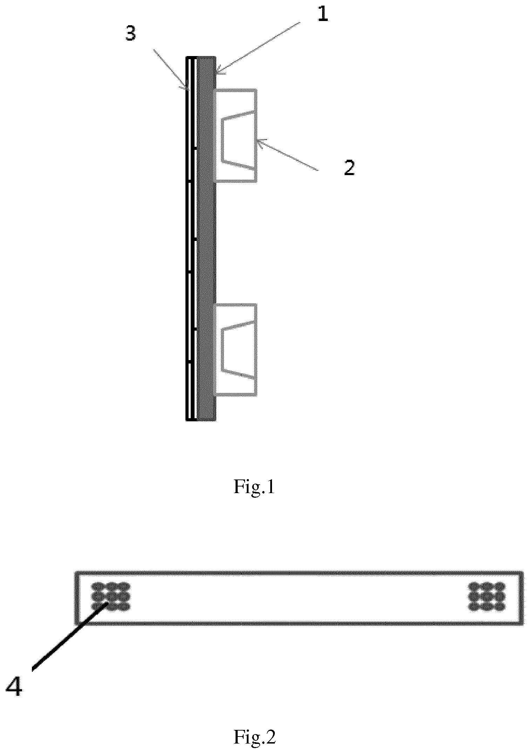

As shown in Fig.1, the present disclosure provides in one embodiment a backlight module, which includes a substrate 1, a plurality of light sources 2 arranged at one side of the substrate, and a graphite thermal conduction layer 3 arranged at the other side of the substrate.

According to the backlight module in the embodiments of the present disclosure, the heat generated in a body is dissipated through the graphite thermal conduction layer. Depending on the characteristics of graphite itself, the graphite thermal conduction layer has thermal conductivity up to 1000 w/mk in a horizontal direction. The graphite thermal conduction layer may be arranged, and used to dissipate the heat, in a direction identical to a hot gas flow direction. As a result, it is able to improve the heat dissipation efficiency maximally, thereby to prevent the occurrence of light attenuation and prolong a service life of the light source.

It should be appreciated that, many experiments have shown that, in terms of economics or in terms of manufacture processes and heat dissipation efficiency, graphite is an optimal material for the thermal conduction layer. As an advanced nano-composite material, graphite may be adapted to any surfaces so as to achieve uniform thermal conduction. In addition, graphite may be used to shield electromagnetic interference (EMI), and meanwhile it has unique grain alignment so as to enable the uniform thermal conduction in two directions.

To be specific, during the actual application, the light sources 2 may be LED lamps distributed on the substrate 1. In order to facilitate the heat dissipation, the substrate is a printed circuit board (PCB) made of aluminum. Of course, apart from aluminum, the PCB may also be made of any other materials with physical properties identical or similar to aluminum.

The graphite thermal conduction layer may be directly coated onto the substrate 1. Of course, the graphite thermal conduction layer may be of a sheet-like shape, and the sheet-like graphite thermal conduction layer may be adhered onto the substrate 1. Such a sheet-like structure may be adapted to any surfaces in a better manner. The coating and adhesion modes are simple and easily implemented.

In addition, the backlight module further includes a back plate of the body, and the substrate 1 is arranged at two ends of the back plate so as to form, together with the LED lamps, an edge-type light source.

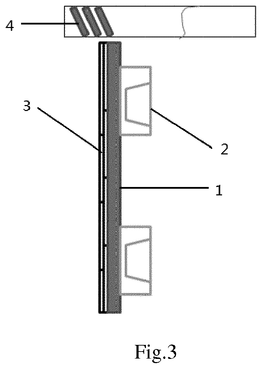

As shown in Figs.2-3, via-holes 4 are provided at two ends at a bottom of the back plate. In order to prevent the heat dissipation from being adversely affected due to the dust and to prevent the light leakage, the via-holes 4 may be formed obliquely.

The present disclosure further provides in one embodiment a display device including the above-mentioned backlight module. The display device further includes an upper substrate and a lower substrate arranged opposite to each other to form a cell. An upper polarizer is arranged at an upper surface of the upper substrate, a color filter layer is arranged at a lower surface of the upper substrate, a wire-grid polarizer and an array layer are arranged at an inner surface of the lower substrate, an alignment layer is arranged at an inner surface of each of the upper and lower substrates, a liquid crystal layer is arranged between the upper substrate and the lower substrate and sealed with a sealant at its periphery, nano-particles are arranged at an outer surface of the lower substrate, and a reflector is arranged on the surface where the nano-particles are arranged.

According to the display device in the embodiments of the present disclosure, the heat generated in the body is dissipated through the graphite thermal conduction layer. Depending on the characteristics of graphite itself, the graphite thermal conduction layer has thermal conductivity up to 1000 w/mk in a horizontal direction. The graphite thermal conduction layer may be arranged, and used to dissipate the heat, in a direction identical to a hot gas flow direction. As a result, it is able to improve the heat dissipation efficiency maximally, thereby to prevent the occurrence of light attenuation and prolong a service life of the light source.

The display device may be an electronic product such as a liquid crystal display panel, a liquid crystal display device, a flat-panel PC, a laptop PC or an electronic book.

The above are merely the preferred embodiments of the present disclosure. It should be appreciated that, a person skilled in the art may make further modifications and improvements without departing from the principle of the present disclosure, and these modifications and improvements shall also fall within the scope of the present disclosure.

## Claims

1. A backlight module, comprising:
a substrate (1);
a plurality of light sources (2) arranged at one side of the substrate (1);
a graphite thermal conduction layer(3) arranged at the other side of the substrate (1), and
a back plate of a body,
wherein the backlight module is **characterized in that** the substrate (1) is arranged at each of two side portions of the back plate, via-holes (4) are provided at two side portions at a bottom of the back plate, and the via-hole is formed obliquely.

2. The backlight module according to claim 1, wherein the graphite thermal conduction layer (3) is coated onto the substrate (1).

3. The backlight module according to claim 1, wherein the graphite thermal conduction layer (3) is of a sheet-like shape, and the sheet-like graphite thermal conduction layer (3) is adhered onto the substrate (1).

4. The backlight module according to any one of claims 1 to 3, wherein the light source (2) is a light-emitting diode (LED) lamp.

5. The backlight module according to any one of claims 1 to 4, wherein the substrate (1) is a printed circuit board made of aluminum.

6. A display device, comprising the backlight module according to any one of claims 1 to 5.

7. The display device according to claim 9, further comprising an upper substrate (1) and a lower substrate (1) arranged opposite to each other to form a cell,
wherein an upper polarizer is arranged at an upper surface of the upper substrate (1), a color filter layer is arranged at a lower surface of the upper substrate (1),
a wire-grid polarizer and an array layer are arranged at an inner surface of the lower substrate (1),
an alignment layer is arranged at an inner surface of each of the upper and lower substrates,
a liquid crystal layer is arranged between the upper substrate (1) and the lower substrate (1) and sealed with a sealant at its periphery,
nano-particles are arranged at an outer surface of the lower substrate (1), and a reflector is arranged on the surface where the nano-particles are arranged.

## Patentansprüche

1. Rücklichtmodul, umfassend:
ein Substrat (1);
eine Vielzahl von Lichtquellen (2), die an einer Seite des Substrats (1) angeordnet ist;
eine Wärmeleitschicht aus Graphit (3), die auf der anderen Seite des Substrats (1) angeordnet ist, und
eine hintere Platte eines Körpers,
wobei das Rücklichtmodul **dadurch gekennzeichnet ist, dass** das Substrat (1) an jedem von zwei Seitenabschnitten der hinteren Platte angeordnet ist, Durchgangslöcher (4) auf zwei Seitenabschnitten an einer unteren Seite der hinteren Platte bereitgestellt sind und das Durchgangsloch schräg gebildet ist.

2. Rücklichtmodul nach Anspruch 1, wobei die Wärmeleitschicht aus Graphit (3) auf das Substrat (1) beschichtet ist.

3. Rücklichtmodul nach Anspruch 1, wobei die Wärmeleitschicht aus Graphit (3) eine blattähnliche Form aufweist und die blattähnliche Wärmeleitschicht aus Graphit (3) auf das Substrat (1) gehaftet ist.

4. Rücklichtmodul nach einem der Ansprüche 1 bis 3, wobei die Lichtquelle (2) eine Licht emittierende Dioden (LED)-Lampe ist.

5. Rücklichtmodul nach einem der Ansprüche 1 bis 4, wobei das Substrat (1) eine Leiterplatte, hergestellt aus Aluminium, ist.

6. Anzeigevorrichtung, umfassend das Rücklichtmodul nach einem der Ansprüche 1 bis 5.

7. Anzeigevorrichtung nach Anspruch 9, weiter umfassend ein oberes Substrat (1) und ein unteres Substrat (1), die einander gegenüberliegend angeordnet sind, um eine Zelle zu bilden,
wobei ein oberer Polarisator auf einer oberen Fläche des oberen Substrats (1) angeordnet ist, eine Farbfilterschicht auf einer unteren Fläche des oberen Substrats (1) angeordnet ist,
ein Drahtgitter-Polarisator und eine Arrayschicht an einer inneren Fläche des unteren Substrats (1) angeordnet sind,
eine Ausfluchtungsschicht an einer inneren Fläche jedes des oberen und unteren Substrats angeordnet ist,
eine Flüssigkristallschicht zwischen dem oberen Substrat (1) und dem unteren Substrat (1) angeordnet und an seinem Umfang mit einer Dichtung abgedichtet ist,
Nanopartikel an einer äußeren Fläche des unteren Substrats (1) angeordnet sind, und
ein Reflektor auf der Fläche angeordnet ist, auf der die Nanopartikel angeordnet sind.

## Revendications

1. Module de rétroéclairage, comprenant :
un substrat (1) ;
une pluralité de sources de lumière (2) agencées d'un côté du substrat (1) ;
une couche de conduction thermique en graphite (3) agencée de l'autre côté du substrat (1), et
une plaque arrière d'un corps,
dans lequel le module de rétroéclairage est **caractérisé en ce que** le substrat (1) est agencé au niveau de chacune des deux parties latérales de la plaque arrière, des trous d'interconnexion (4) sont prévus au niveau des deux parties latérales au niveau d'un fond de la plaque arrière, et le trou d'interconnexion est formé obliquement.

2. Module de rétroéclairage selon la revendication 1, dans lequel la couche de conduction thermique en graphite (3) est déposée sur le substrat (1).

3. Module de rétroéclairage selon la revendication 1, dans lequel la couche de conduction thermique en graphite (3) a une forme similaire à une feuille, et la couche de conduction thermique en graphite similaire à une feuille (3) est collée sur le substrat (1).

4. Module de rétroéclairage selon l'une quelconque des revendications 1 à 3, dans lequel la source de lumière (2) est une lampe à diodes électroluminescentes (DEL).

5. Module de rétroéclairage selon l'une quelconque des revendications 1 à 4, dans lequel le substrat (1) est une carte de circuit imprimé constituée d'aluminium.

6. Dispositif d'affichage, comprenant le module de rétroéclairage selon l'une quelconque des revendications 1 à 5.

7. Dispositif d'affichage selon la revendication 9, comprenant en outre un substrat supérieur (1) et un substrat inférieur (1) agencés l'un en face de l'autre pour former une cellule,
dans lequel un polariseur supérieur est agencé au niveau d'une surface supérieure du substrat supérieur (1), une couche de filtre coloré est agencée au niveau d'une surface inférieure du substrat supérieur (1),
un polariseur à grille filaire et une couche de réseau sont agencés au niveau d'une surface intérieure du substrat inférieur (1),
une couche d'alignement est agencée au niveau d'une surface intérieure de chacun des substrats supérieur et inférieur,
une couche de cristal liquide est agencée entre le substrat supérieur (1) et le substrat inférieur (1) et scellée avec un produit d'étanchéité au niveau de sa périphérie,
des nanoparticules sont agencées au niveau d'une surface extérieure du substrat inférieur (1), et
un réflecteur est agencé sur la surface où les nanoparticules sont agencées.
